# EUROPEAN PATENT APPLICATION

(11) **EP 1 619 644 A1**
(43) Date of publication of application: **25.01.2006**
(21) Application number: 04723715.1
(22) Date of filing: 26.03.2004
(51) Int. Cl.: G09B 19/24, G09B 23/34, A61B 19/00

(54) **MANIKIN AND METHOD OF MANUFACTURING THE SAME**

(30) Priority: 26.03.2003 JP 2003085805; 15.05.2003 JP 2003137352
(71) Applicant: National Institute of Advanced Industrial Science and Technology, Tokyo 100-8921 (JP)
(72) Inventor: YAMASHITA, J., National Inst.Adv. Ind. Sce & Tech., Tsukuba-shi (JP); MORIKAWA, O., National Inst. Adv. Ind Sce & Tech., Tsukuba-shi (JP); HASHIMOTO, R., National Inst. Adv. Ind. Sce&Tech., Tsukuba-shi (JP); FUKUI, Y., National Inst. Adv. Ind. Sce&Tech., Tsukuba-shi (JP); YAMAUCHI, Y., National Inst. Adv Ind. Sce & Tech, Tsukuba-shi (JP); MOCHIMARU, M., AIST-Nat.Inst.Adv.Ind.Sce&Tech, Koto-ku, Toky (JP); UNO, Hiroshi. Koken Co., Ltd., Tsuruoka-shi, Yamagata 9970011 (JP); HARA, Hiroyuki, Koken Co., Ltd., Tsuruoka-shi, Yamagata 9970011 (JP)
(74) Representative: HOFFMANN EITLE
(86) International application number: PCT/JP2004/004263
(87) International publication number: WO 2004/086334

(57) **Abstract**

A replica in which a bone part and soft tissue are reproduced with physical properties close to those of real organs and tissues in term of shape, color, apparent textures, softness and hardness, and which allows a trainee to practice surgical techniques so that part of the replica can be incised by surgical manipulation, together with a production method for the replica. The bone part and soft tissue are reproduced with physical properties close to those of real tissue. The incisable part is replaceable as a component, whereas the body part of the replica can be used repeatedly.

## Description

### TECHNICAL FIELD

This invention relates to models of human and animal organs and tissues (hereinafter referred to as "replicas") that are applicable for dummy patients used to practice surgical techniques, or to develop surgical instruments or methods in the field of medical and veterinary education. More particularly, this invention relates to a replica that allows trainees to practice surgical techniques using surgical instruments such as forceps while feeling tactile responses close to those felt when manipulating real organs.

### BACKGROUND ART

Conventional replicas are produced by molding, hand-making, and rapid prototyping (RP) techniques. For molded replicas, a mold is made from a cadaver or human skeletal specimen, and resin or plaster is poured into the mold. Molded replicas are the most extensively used because they can be mass-produced at relatively low cost, provided that the replica structure is neither fine nor complicated. Handmade replicas are produced one by one and are therefore expensive. However, they are suitable for single-part production. Rapid prototyped replicas can be formed only with a single material; however, their use has begun in the field of plastic surgery as Advanced Progressive Medical Treatment "Surgical Planning Using Life-Size 3D Organ Model" approved by the Ministry of Health, Labour and Welfare of Japan. Thus, there have been various types of replicas (see Patent Documents 1, 2, 3 and 4).

### [Patent Document 1]

Japanese Patent Application Unexamined Publication (KOKAI) No. 2001-005377

### [Patent Document 2]

Japanese Patent Application Unexamined Publication (KOKAI) No. Hei 11-262542

### [Patent Document 3]

Japanese Patent Application Unexamined Publication (KOKAI) No. Hei 11-249548

### [Patent Document 4]

Published Japanese Translation of PCT International

Publication for Patent Application No. Hei 8-500021

Surgical training is currently performed using animals, cadavers, and virtual reality (VR) technology.
(1) Use of animals: Young pigs are used for laparoscopy surgery. Meanwhile, there are commercially available abdominal organ models that allow trainees to practice surgical techniques by placing pig or other animal organs in the models. However, there are many regions other than the abdominal organs in which animals cannot be used for surgical training.
(2) Use of cadavers: Cadavers have the correct shape, but the stiffness of the soft tissue differs from that of real organs and tissues owing to fixative. In addition, cadavers available for surgical training are rare in many countries including Japan, and the number of opportunities for surgical training using cadavers is therefore decreasing. Furthermore, it has been noted that the use of cadavers involves a danger of infection.
(3) Use of VR technology: This is still under research and lacks or has a very limited sense of touch (haptics). In addition, VR systems are costly and require intensive maintenance; systems with haptic feedback are particularly fragile. Accordingly, there is a strong need for good replicas practical for surgical manipulation training.

For use in surgical practice, however, the existing replicas suffer from the following problems.

### (1) Molded replicas:

In the production of molded replicas, the exterior shape of the original is simplified. The molded replica therefore cannot tolerate endoscopic observation under magnification. Since molded replicas are not intended to be broken in surgical operations, or to undergo incision and dissection, the internal structure is quite different from that of the actual organ. Furthermore, molded replicas are quite strong in comparison to the originals to enable then to endure for a long time. They are therefore unsuitable for training in the perception of tactile sensation during surgery.

### (2) Handmade replicas:

Handmade replicas are superior to molded replicas in terms of their exterior shape. However, they are not intended to undergo incision, as in molded replicas. Handmade replicas therefore do not replicate the internal structure or mechanical strength of tissues. Furthermore, they are costly and hence unsuitable for training in which they can be broken by surgical manipulation.

### (3) Rapid prototyped (RP) replicas:

As rapid prototyped articles are each formed from a single material, the bone and soft tissue cannot be formed simultaneously. Some RP machines are capable of using two different types of material simultaneously; however, they are support material and rapid prototype material. There is no RP system capable of producing an article made of a number of materials, and the hardness of a rapid prototype article is homogeneous. Since materials for rapid prototyping are designed for industrial use, they are strong so that formed articles will not be distorted or broken when removed from the RP system (nylon, nylon + glass, metal, epoxy resin, ABS resin). These materials are stronger than bone, and hence cannot be used as they are intended to reproduce tactile responses during surgical training.

RP replicas are satisfactory in the field of plastic surgery or the like, for example, where a material is shaped to make a mold for an artificial bone to be implanted where the patient's bone is missing. However, replicas cannot be used as they are more suitable for training for other surgical operations.

This invention was developed in view of the above problems. The objective is to provide a replica in which the bone and soft tissue are reproduced with physical properties close to those of real organs and tissues in terms of shape, color, apparent texture, softness and hardness, and which allows a trainee to practice surgical techniques in such a manner that part of the replica can be broken, incised or resected by surgical manipulation, and also to develop a production method for the replica.

### DISCLOSURE OF THE INVENTION

This invention provides a replica with bone and soft tissue reproduced with physical properties close to the real tissue. At least part of the replica may be incised and irreversibly broken during surgical manipulation and can be replaced as a component, whereas the body section of the replica can be used repeatedly.

In addition, this invention provides a production method for the replica. The steps involve creating body-shape data using CAD (Computer-Aided Design) and rapid prototyping the body part based on the shape data. A resin coating is then formed on the rapid prototype body part in order to create a reproduction. The body part may be the paranasal sinus region, including the frontal sinus, maxillary sinus, sphenoid sinus, and ethmoid sinus i.e. a part that cannot be imaged by CT (Computerized Tomography) and that is undesirably thick in RP.

### BRIEF DESCRIPTION OF THE DRAWINGS

Fig. 1 is a general schematic view showing the invention.
Fig. 2 shows an image (endoscopic image) from an endoscope camera.
Fig. 3 shows an image (endoscopic image) from an endoscope camera.
Fig. 4 shows a bone part constituting part of the nasal unit.
Fig. 5 shows a bone part seen from the top of Fig. 4.
Fig. 6 shows the bone part in Fig. 4 seen obliquely downward from the right forward position above the bone part.
Fig. 7 shows the original bone part.
Fig. 8 shows the bone part formed with a resin coating.
Fig. 9(a) shows the medial of an ethmoid sinus part with the associated ethmoid sinus not fitted, and Fig. 9(b) shows the lateral of the ethmoid sinus part wiht the associated ethmoid sinus not fitted.
Fig. 10(a) shows the medial of the ethmoid sinus part with the associated ethmoid sinus fitted, and Fig. 10(b) shows the lateral of the ethmoid sinus part with the associated ethmoid sinus fitted.
Fig. 11(a) shows the medial of the ethmoid sinus part with the mucous membrane covering the natural ostium of the maxillary sinus formed on the ethmoid sinus, and Fig. 11(b) shows the lateral of the ethmoid sinus part wiht the mucous membrane covering the natural ostium of the maxillary sinus formed on the ethmoid sinus.
Fig. 12 shows the ethmoid sinus formed by an RP system.
Fig. 13 shows the ethmoid sinus formed using the RP system, shown in Fig. 12, with a resin coating creating the thin bone wall of the ethmoid sinus by dipping the ethmoid sinus in a Toa Dip solution prepared in white or a color close to that of the mucous membrane.
Fig. 14 shows the ethmoid sinus formed with the mucous membrane, shown in Fig. 13, with a polyp made of silicone rubber formed on the ethmoid sinus.
Fig. 15 is a general schematic view showing the invention.
Fig. 16 shows an image (endoscopic image) from an endoscope camera.
Fig. 17 shows an image (endoscopic image) from an endoscope camera.
Fig. 18 shows a bone part constituting part of the nasal unit.
Fig. 19 shows the bone part seen from the top of Fig. 18.
Fig. 20 shows the bone part in Fig. 18 seen obliquely downward from the right forward position above the bone part.
Fig. 21 shows the original bone part.
Fig. 22 shows a bone part formed with a resin coating.
Fig. 23(a) shows the medial of an ethmoid sinus part with the associated ethmoid sinus not fitted, and
   Fig. 23(b) shows the lateral of the ethmoid sinus part with the associated ethmoid sinus not fitted.
Fig. 24(a) shows the medial of the ethmoid sinus part with the associated ethmoid sinus fitted, and Fig. 24(b) shows the lateral of the ethmoid sinus part with the associated ethmoid sinus fitted.
Fig. 25(a) shows the medial of the ethmoid sinus part with the mucous membrane covering the natural ostium of the maxillary sinus formed on the ethmoid sinus, and Fig. 25(b) shows the lateral of the ethmoid sinus part with the mucous membrane covering the natural ostium of the maxillary sinus natural ostium formed on the ethmoid sinus.
Fig. 26 shows the ethmoid sinus formed by an RP system.
Fig. 27 shows the ethmoid sinus formed by the RP system, shown in Fig. 26, with a resin coating creating the thin bone wall of the ethmoid sinus by dipping the ethmoid sinus in a Toa Dip solution prepared in white or a color close to that of the mucous membrane.
Fig. 28 shows the ethmoid sinus formed with the mucous membrane, shown in Fig. 27, with a polyp made of silicone rubber formed on the ethmoid sinus.

### BEST METHOD FOR IMPLEMENTING THE INVENTION

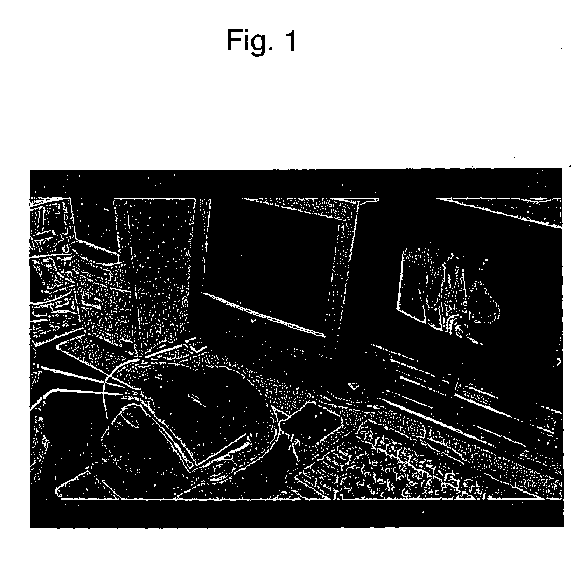

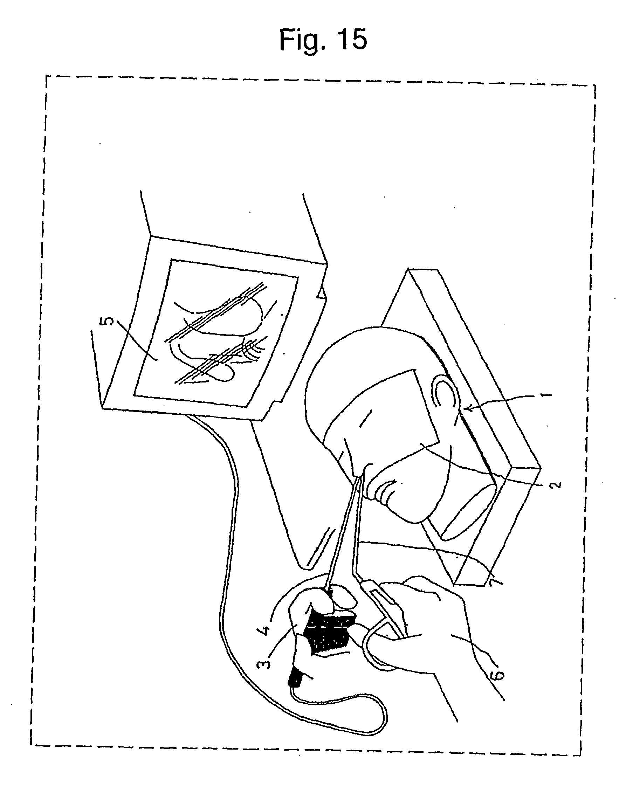

The use of replicas and their production method according to this invention are described below with reference to the accompanying diagrams. A nasal model is used as an example replica. Figs. 1 and 15 are general schematic views showing the invention. The central part of the face of a dummy 1 is nasal unit 2 of the nasal model. Nasal unit 2 is a replica in which the bone and soft tissue are reproduced with physical properties close to those of the real tissue. As shown in Figs. 1 and 15, an operator (doctor) holds an endoscope 4 (for nasal surgery) with his/her left hand 3 and a surgical instrument 7, e.g. forceps, tweezers, or a scalpel, with his/her right hand 6. A monitor screen 5 displays an image from the endoscope camera 4 inserted into the nasal cavity. The doctor performs surgery while observing the monitor screen 5.

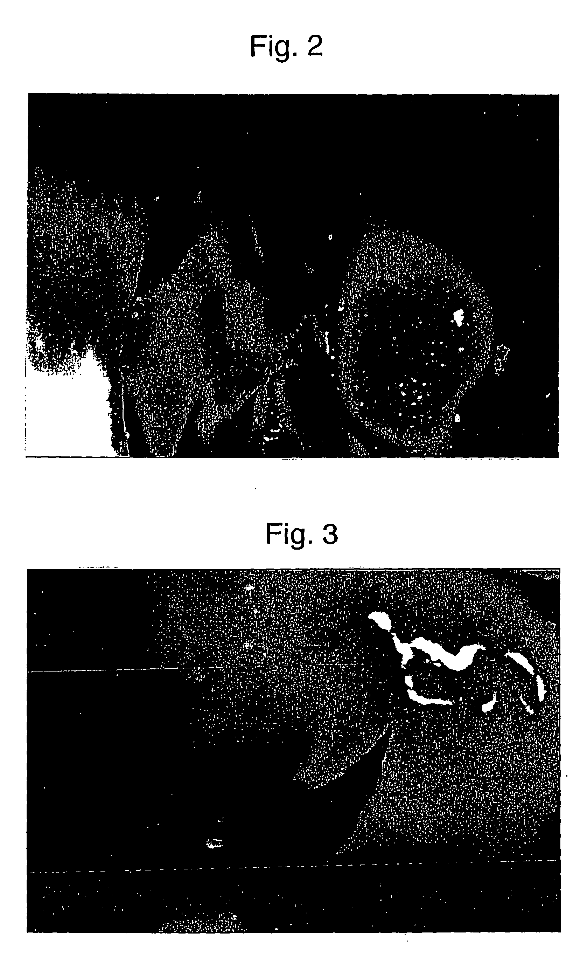

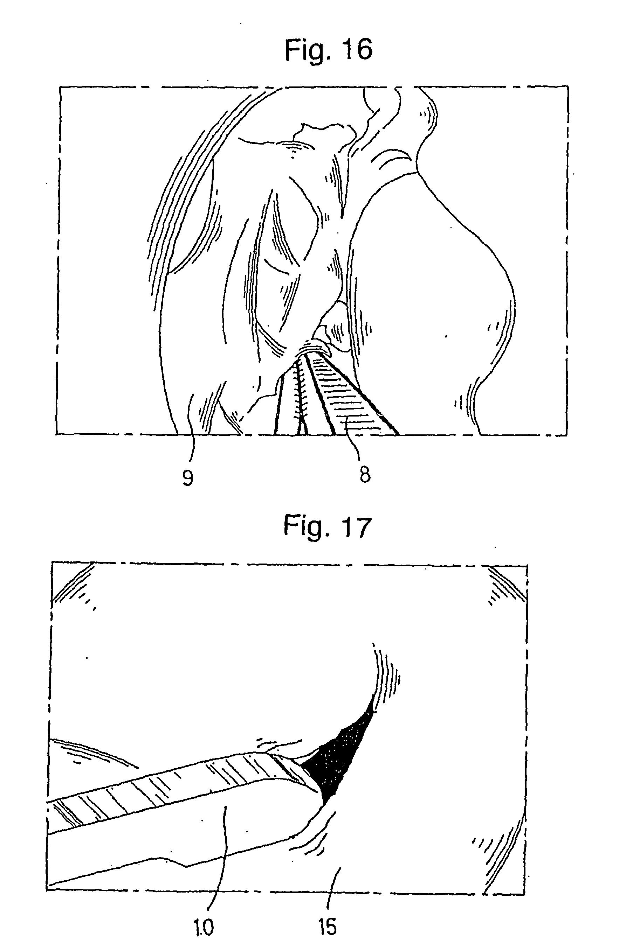

Figs. 2 and 16 show an image (endoscopic image) from the endoscope camera 4. The image shows the tip of a pair of tweezers 8 inserted into the nasal cavity, that is, the image shows the moment (state) at which the front of the ethmoid sinus 9 (described later) is pushed with the tweezers 8 to make a hole in the ethmoid sinus 9.

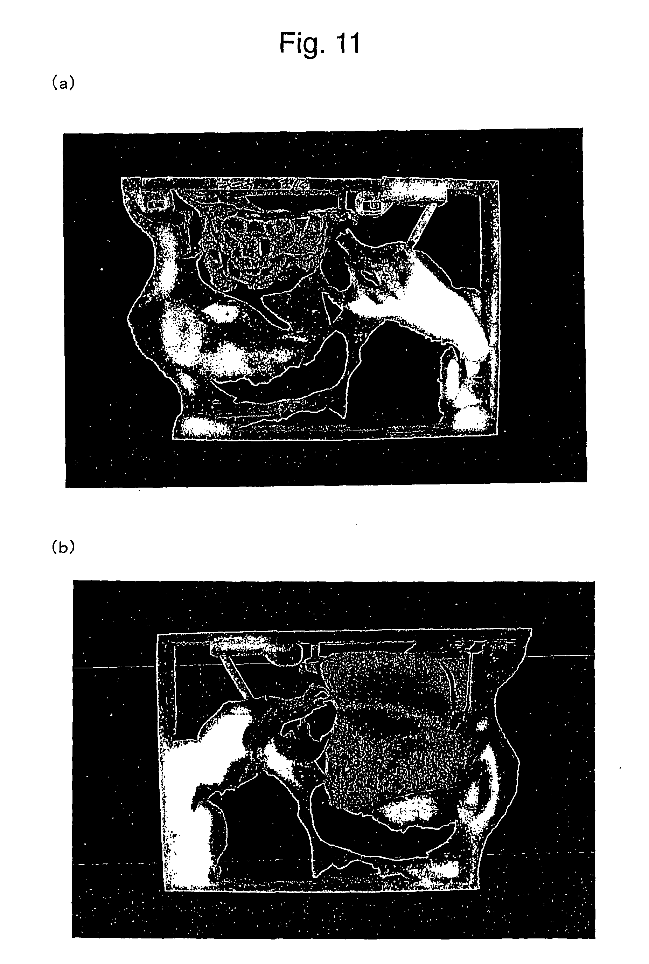

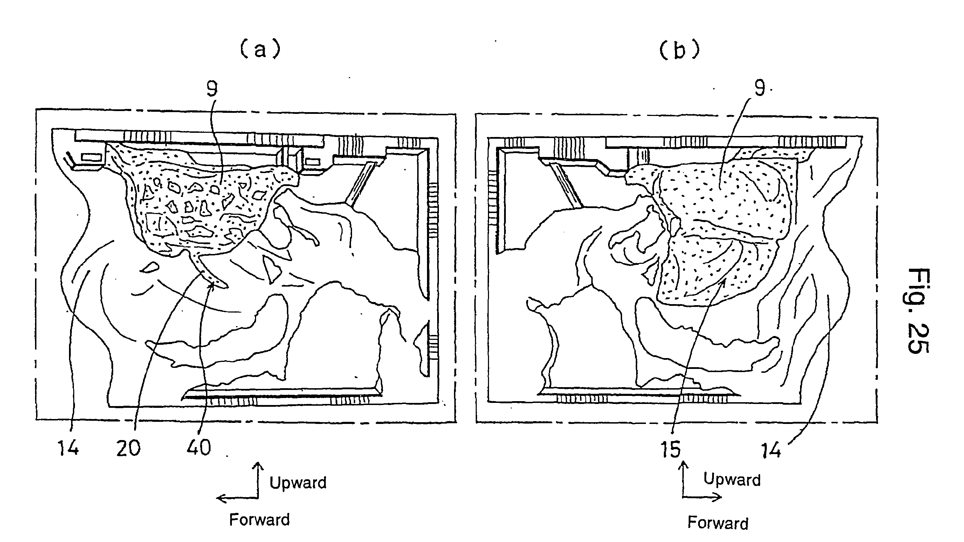

Figs. 3 and 17 show an image (endoscopic image) from the endoscope camera 4. The image shows a scalpel 10 inserted into the nasal cavity, that is, the image shows the point at which the mucous membrane 15 covering the natural ostium of the maxillary sinus [denoted by reference numeral 20 in Fig. 11(a) and Fig. 25(a)] is being cut open with the scalpel 10.

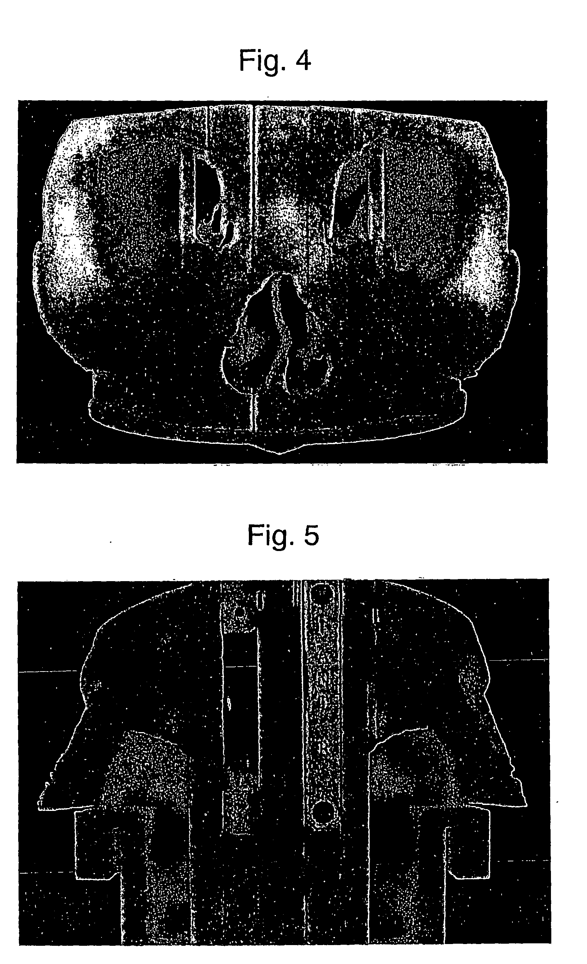

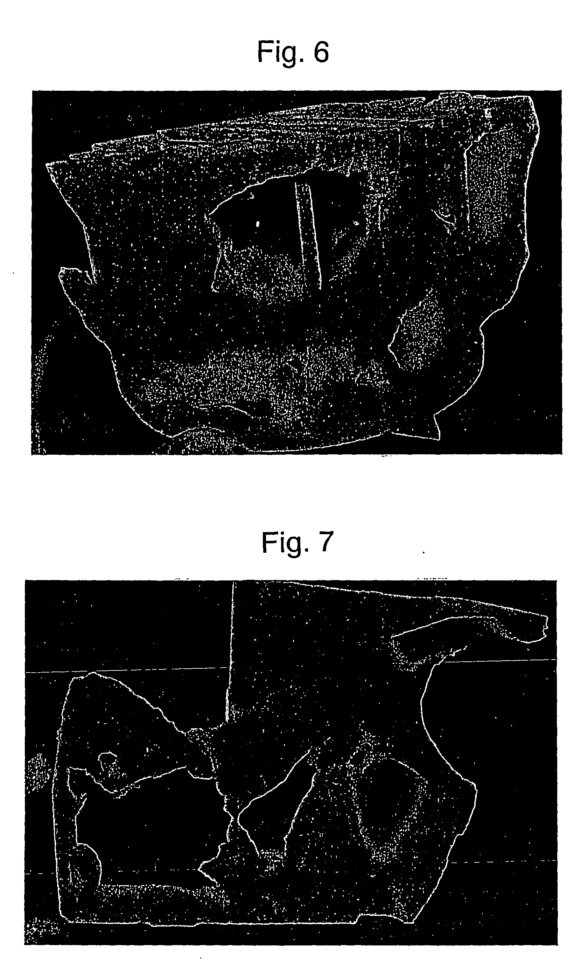

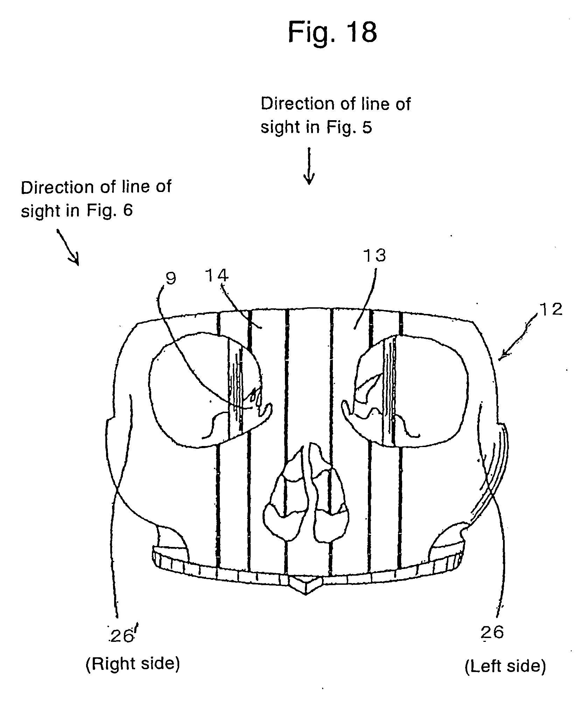

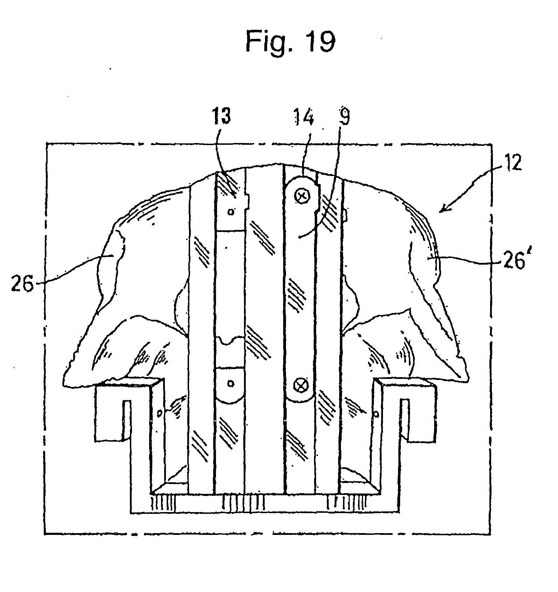

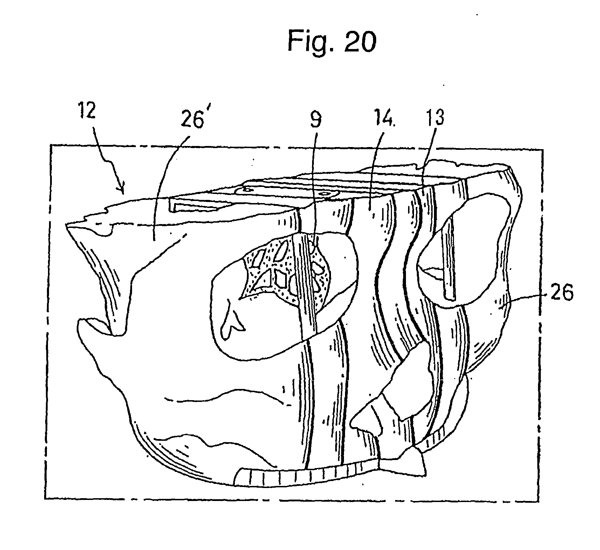

Figs. 4 and 18 show the bone part 12 constituting a part of the nasal unit 2. Figs. 5 and 19 show the bone part 12 seen from the top of Figs. 4 and 18. Figs. 6 and 20 show the bone part 12 in Figs. 4 and 18 seen obliquely downward from the right forward position above the bone part 12. As shown in Figs. 4 and 18, and Figs. 5 and 19, the bone part 12 is fitted with left and right ethmoid sinus parts 13 and 14 constituting a section of the bone part 12. The ethmoid sinus part 14 is fitted with an ethmoid sinus 9 that can be incised and irreversibly broken during surgical manipulation. The ethmoid sinus 9 is a replaceable part (component) by removing together with the ethmoid sinus part 14 as one unit. The ethmoid sinus part 13 can also be fitted with a replaceable breakable component.

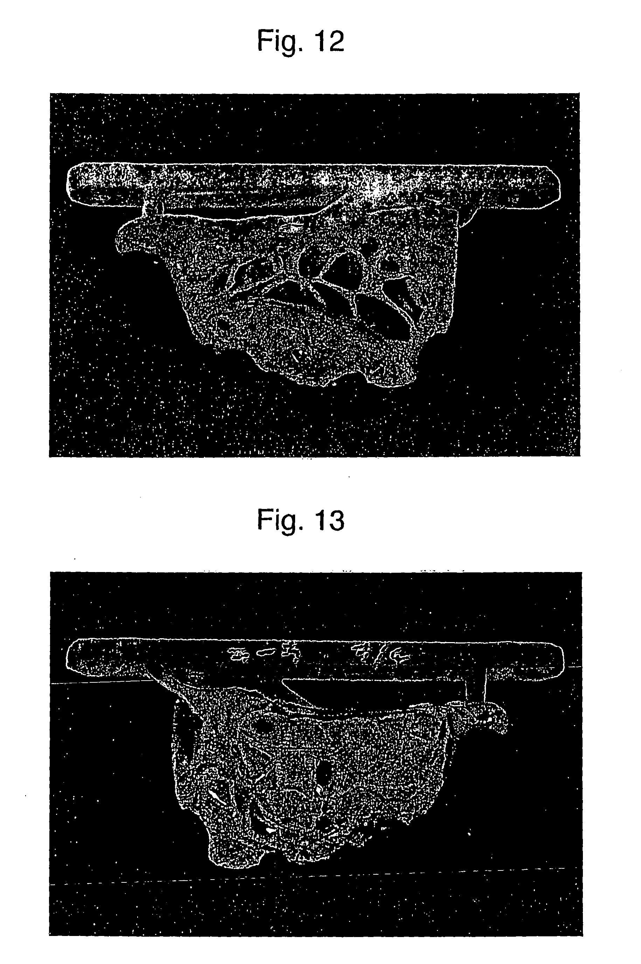

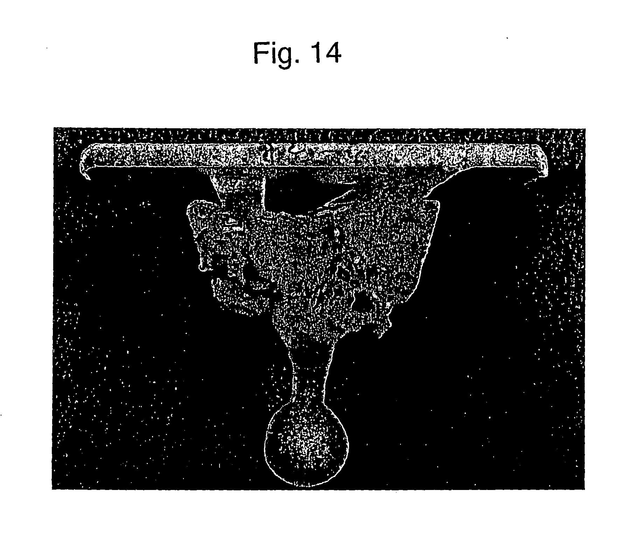

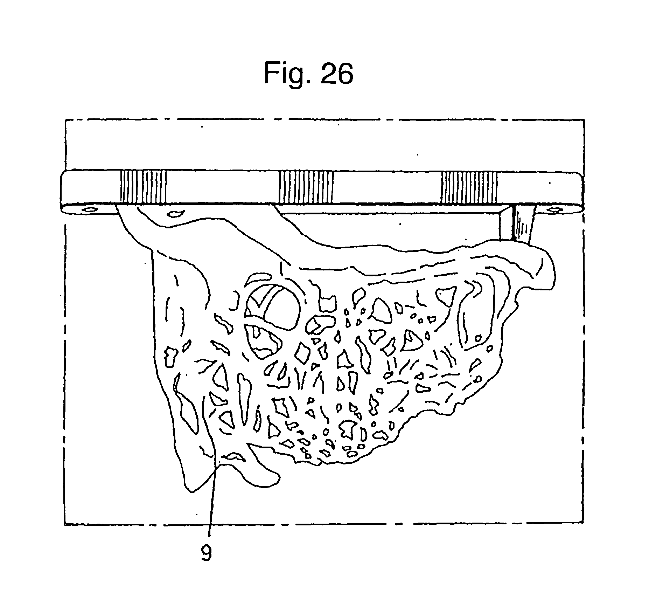

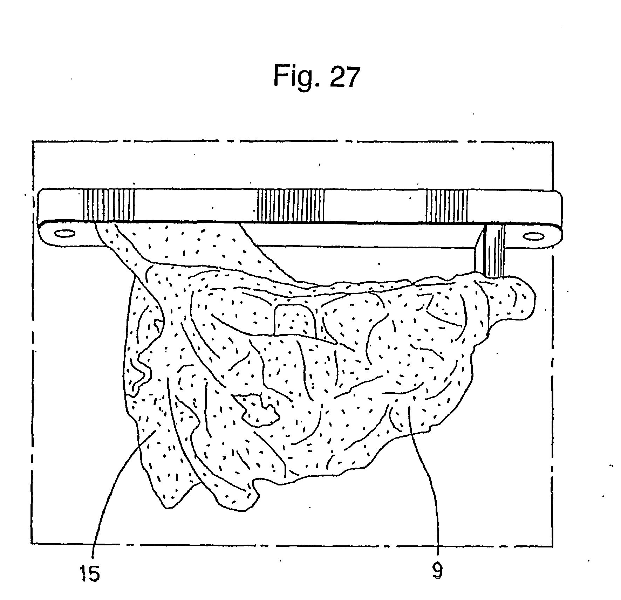

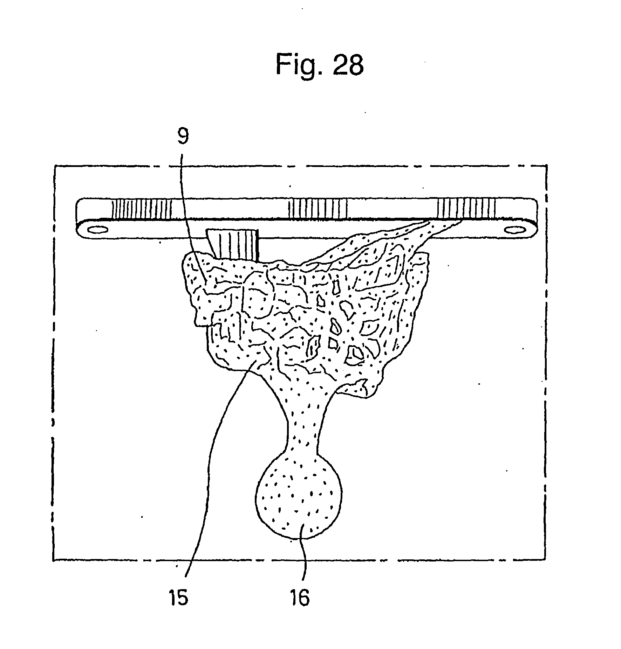

Figs. 12 and 26 show the ethmoid sinus 9 formed by the RP (Rapid Prototyping) system. Figs. 13 and 27 show the ethmoid sinus 9 formed with a resin coating 15, that is, dipped in a Toa Dip solution prepared in a color close to that of the mucous membrane, thereby forming a resin coating 15 as a thin bone constituting the wall of the ethmoid sinus and mucous membrane covering the surface of the thin bone. Figs. 14 and 28 show the ethmoid sinus 9 with the mucous membrane 15 as shown in Figs. 13 and 27, with has a polyp 16 formed of silicone rubber.

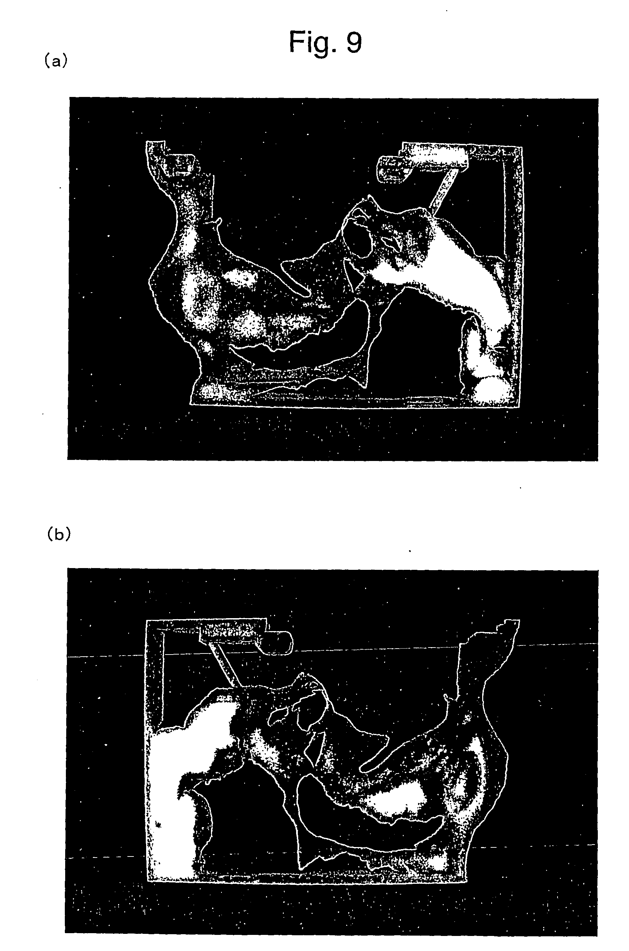

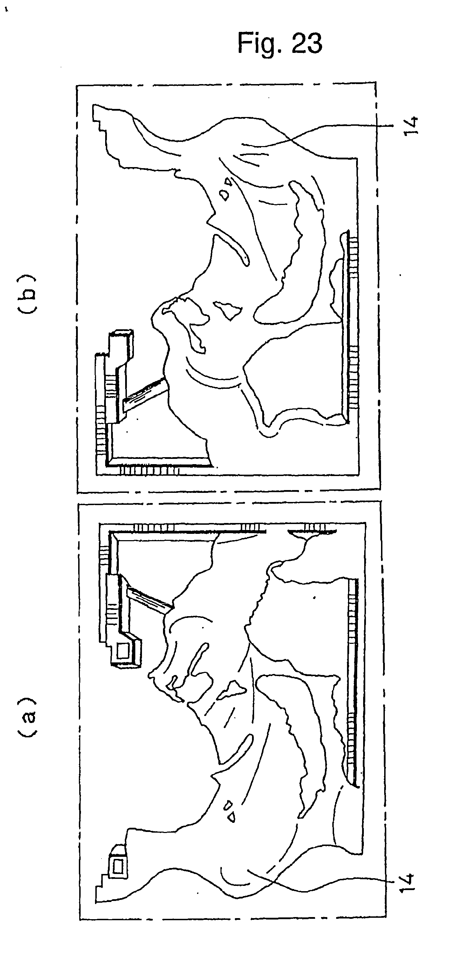

Figs. 9(a) and 23(a) show the medial of the ethmoid sinus part 14 with the ethmoid sinus 9 not fitted.

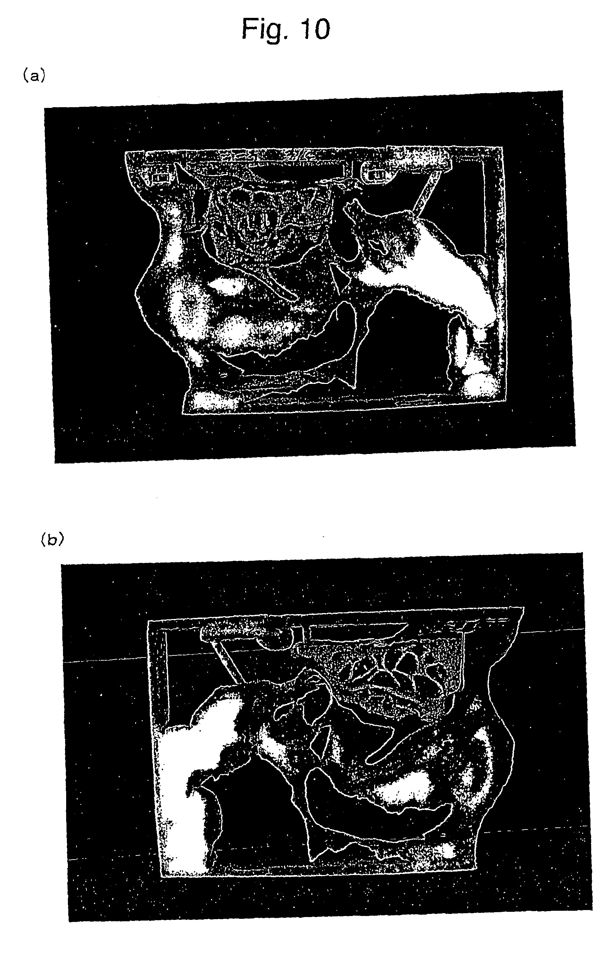

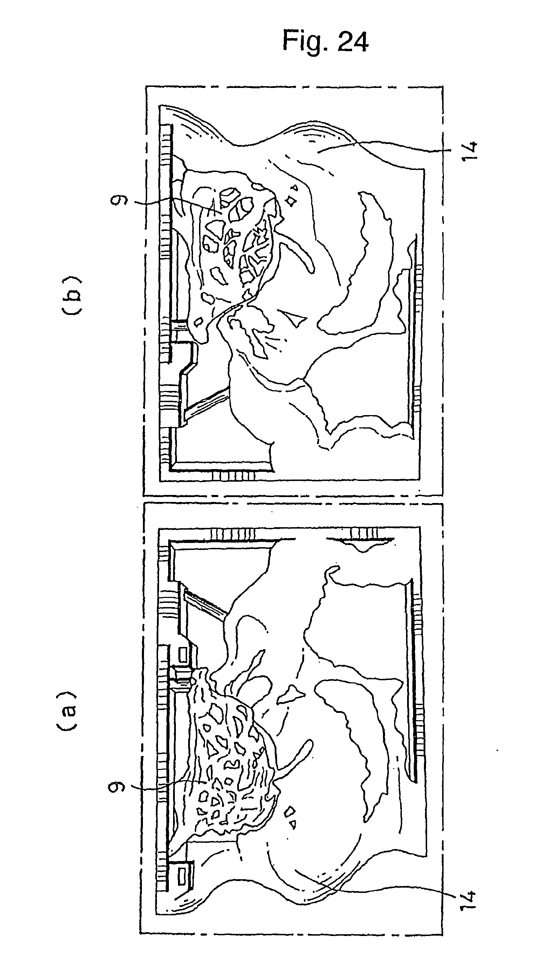

Figs. 9(b) and 23(b) show the lateral of the ethmoid sinus part 14 with the ethmoid sinus 9 not fitted. Figs. 10(a) and 24(a) show the medial of the ethmoid sinus part 14 with the ethmoid sinus 9 fitted. Figs. 10(b) and 24(b) show the lateral of the ethmoid sinus part 14 with the ethmoid sinus 9 fitted. In Figs. 11(a) and 25(a), the reference numeral 20 denotes the position of the natural ostium of the maxillary sinus. Figs. 11(a) and 25(a) show the medial of the ethmoid sinus part 14 with the mucous membrane 15 covering the natural ostium of the maxillary sinus 20 formed on the ethmoid sinus 9. Figs. 11(b) and 25(b) show the lateral of the ethmoid sinus part 14 with the mucous membrane 15 covering the natural ostium of the maxillary sinus 20 formed on the ethmoid sinus 9. As stated above, the mucous membrane 15 is the part to be cut open with a scalpel 10 by a doctor.

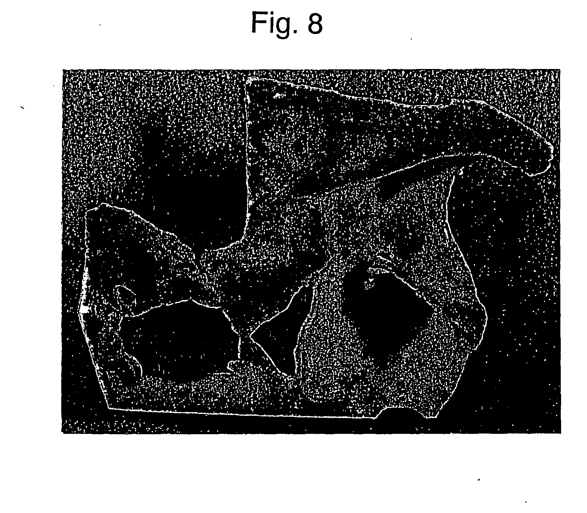

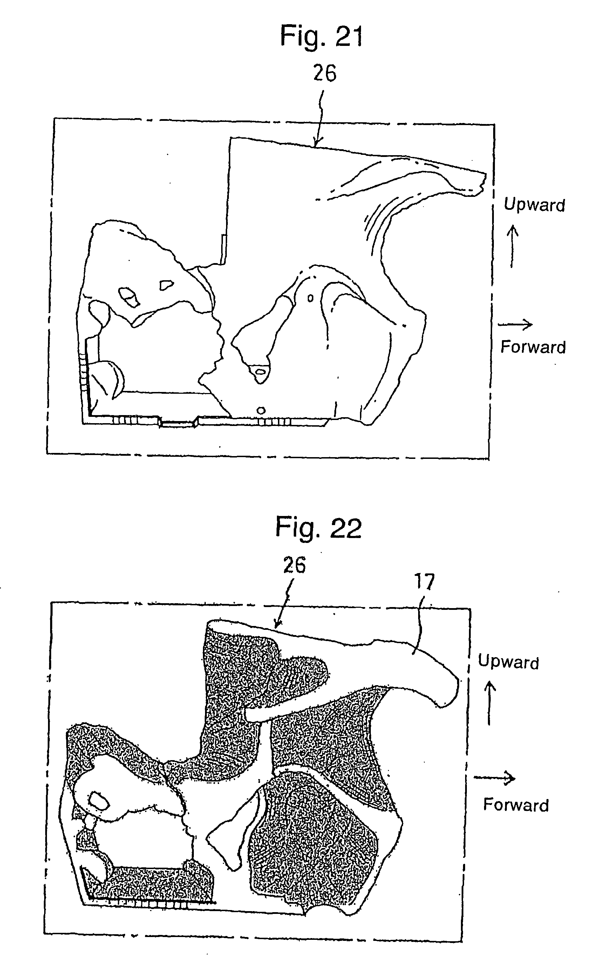

Figs. 7 and 21 show the original bone component 26 constituting a section of the bone part 12. Figs. 8 and 22 show the bone component 26 in Figs. 7 and 21 with a resin coating 17 as the mucous membrane formed using silicone rubber prepared in a color close to that of the mucous membrane. It should be noted that components can be made for each particular purpose to broaden the incisable range of the replica, for example, by enlarging the extent of the incisable component beyond the ethmoid sinus 9, or by changing the way in which the bone part 12 is divided.

The production method for the replica is as follows:

### (1) Preparation of shape data for an affected part and its vicinity

The respective shapes of the bone and soft tissue of the patient, together with the mucous membrane surface configuration, are extracted using tomographic images, e.g. CT images. The simplest method is as follows: for values (CT values) of the respective pixels of a CT image, a certain value is set as the threshold to compute the isosurface, from which a three-dimensional surface configuration is reconstructed by a known method, e.g. Marching Cubes algorithm. Thereafter, the reconstructed configuration is edited by CAD, for example, to form a closed spatial region. With this method, however, thin bones (with a thickness of not more than approximately 0.1 mm), e.g. the lamina papyracea (paper thin bone between the nose and the eyes) and the walls of the paranasal sinuses, are imaged faintly (darkly) with the currently available CT resolution (0.4 to 0.5 mm in general) because the amount of absorption of X-rays in these bones is small. The shape of these bones therefore cannot be extracted with the same CT values as those of thick bones such as cheekbones.

Accordingly, the shape of a region that cannot be extracted with a simple threshold setting is obtained as follows: the outline shape of the region to be extracted is drawn on a CT image by a skilled doctor or engineer and reconstructed as a three-dimensional surface in the same way as the above isosurface, and the reconstructed shape is edited by CAD, for example, to form a closed spatial region. Alternatively, the boundary surface at the interface with air (mucous membrane surface including bone) is reconstructed as a three-dimensional surface and edited to form a closed spatial region. Thereafter, the surface configuration is further edited by CAD to thin it, thereby bringing it close to the original bone shape. Meanwhile, the exterior shape of the head, including the face, is also extracted.

### (2) Regional components to be subjected to surgical manipulation

Regions that may be subjected to endoscopic sinus surgery are paranasal sinuses, including the ethmoid sinuses, frontal sinuses, maxillary sinuses, and sphenoid sinuses, which are covered with the nasal mucous membrane. The thin walls of bone constituting the ethmoid and other paranasal sinuses and the bones of sections contiguous with the thin walls of bone are cut using CAD to form independent components. Regions not subjected to incision and resection, such as the cheekbones and the forehead bone, are divided to make them easy to make and assemble, and at the same time, furnished with footings and so forth as fitting incisable components (incisable parts). The incisable components are constructed so they can be attached to the peripheral bones (i.e. the footings formed).

### (3) Implementation of mechanical properties (reproduction of tactile responses)

The thin bone walls of components such as the ethmoid and other paranasal sinuses, which may be subjected to surgical manipulation, become excessively strong if they are rapid prototyped using a resin for RP. At the same time, the internal structures of these components are too complex to reproduce by molding and the component are brittle in terms of strength so it is difficult to remove them from the molds. Therefore, shape data is created on CAD so that the walls of the ethmoid and other paranasal sinuses are represented by fine mesh-like structures.
After mesh structures have been formed using an RP system, another resin is coated over the mesh structures, thereby creating a thin membrane with mechanical properties to enable the brittle thin bone walls to respond favorably to surgical manipulation.

More specifically, a coated membrane of acetylcellulose resin (trade name: Toa Dip; available from Tohpe Corporation, Japan) is formed over a mesh structure (diameter of about 0.3 to 0.5 mm) formed using a D-MEC optical rapid prototyping machine (using epoxy resin material), Z Corp. powder rapid prototyping machine (using plaster material), or EOSINT rapid prototyping machine (using polystyrene resin material). With this structure, when the wall of the incisable component is broken or resected with forceps, the component can behave in a manner close to that of real tissue in terms of how the wall breaks and responds to surgical manipulation. The acetylcellulose resin can be colored with pigments and dyes quite easily (acetylcellulose resin materials of various colors are commercially available). Therefore, if acetylcellulose resin is colored like the mucous membrane, the mesh structure is suitable for practical use as an ethmoid sinus component. Furthermore, if a soft silicone rubber coating similar in color to the mucous membrane is applied thinly over a white or pale yellow acetylcellulose resin coating, thin bone covered with a mucous membrane can be reproduced with a realistic appearance.

The bones of regions not subjected to surgical manipulation, such as the cheekbones, are formed with an RP system using a white material close to the color of actual bones, for example, with a powder-sintering machine using a nylon-based material. If the shape is simple, bone in a region not subjected to surgical manipulation may be formed by molding or casting. Soft silicone rubber or similar material colored as the mucous membrane is applied to the surface of the bone component to simulate a mucous membrane layer. If the mucous membrane is made of a material so soft that it separates when it is scraped with a surgical instrument several times, it is possible to judge whether there is unnecessary scraping in the vicinity of the affected part by observing the separation of the mucous membrane after surgical training. When the friction coefficient of the material used to simulate the mucous membrane, e.g. silicone rubber, is high, it is necessary to apply a lubricant, e.g. silicone oil, to the surface to simulate mucus and thereby allow surgical instruments to slide favorably.

The walls of the ethmoid and other paranasal sinuses to be incised can also be formed by the following method. A mesh is formed using a thermosetting resin in the shape of the wall of an ethmoid or other paranasal sinus as developed two dimensionally. While it is soft, the resin mesh is rolled into the desired shape. The shaped resin mesh is then set under heating. Thereafter, a resin coating is formed over the mesh structure using the same method as in the case of RP. Alternatively, the wall of an ethmoid or other paranasal sinus is further divided into parts, and molds are made for the subdivided parts. Molded parts formed individually from resin in molds are integrated together under heating or with an adhesive. Partitions inside the paranasal sinus components are only required to have the membrane spread thereon and therefore need not be contiguous with the outside. As with the partitions, meshes may be hung from the canopy (ceiling). In the case of the above molds, it is possible to employ a production method wherein an agar gel is poured into the molds and freeze-dried, or a process in which wheat-gluten bread or yeast is put into the molds and heated. In this case, if the mechanical strength of the molded pieces is insufficient, an adhesive or resin is applied to enhance the strength.

### (4) Modeling of lesions such as polyps

It is often found that the nasal meatus leading to the ethmoid and other paranasal sinuses is blocked with polyps growing from the mucous membrane wall at and around the paranasal sinuses. A polyp can be simulated by attaching a protrusion made of a soft material, e.g. silicone rubber, to the surface of a paranasal sinus component (see Figs. 14 and 28). Before performing a paranasal sinus-opening operation, it is possible to practice polyp excision. A morbid paranasal sinus is blocked with a thickened mucous membrane, a polyp or pus. If a spongy substance that can be severed with forceps (e.g. a wheat-gluten bread wet with an adhesive, urethane sponge, or pulp mold) is bonded to a paranasal sinus component, it is possible to practice the removal of such a morbid mucous membrane from the paranasal sinus. A paranasal sinus component made of agar or similar can also simulate a morbid paranasal sinus blocked as above.

To reproduce a state in which a natural ostium of the maxillary sinus, which should be open in the case of a healthy person, is undesirably closed with the mucous membrane or a polyp, a resin coating simulating a replaceable mucous membrane is stuck to the hiatus semilunaris area [denoted by reference numeral 40 in Figs. 11(a) and 25(a)] having a natural ostium of the maxillary sinus. For example, a vinyl acetate resin colored like the mucous membrane and softened with acetone or ethanol is incorporated with chopped paper fibers and stretched to a thickness of 0.5 mm. The resulting resin material can be cut open by pinching with forceps and is therefore suitable for simulating a thin mucous membrane. To simulate a mucous membrane so thick and strong that it cannot be pinched with forceps, paper with longer fibers (handmade Japanese paper or non-woven fabric) and coated with silicone rubber is used. With this material, appropriate behavior can be achieved (the mucous membrane formed with this material cannot be pinched with forceps and needs to be cut open with a scalpel or similar).

### (5) General configuration

A patient's face (and trunk) is reproduced using a soft material, e.g. silicone rubber, and the above replica is incorporated into the patient's face. The presence of the patient's body allows more realistic surgical training.

As stated above, a replica using this invention has a structure (both exterior and interior) that is suitable for endoscopic observation under magnification, and has surface texture. In the replica, the internal structures of bones and soft tissue are also reproduced. Therefore, it is possible to obtain tactile responses to incision that are close to those of real tissue; that is, bone walls that are so thin that they cannot be imaged by CT and may be formed undesirably thick by RP can be reproduced by covering a rapid prototyped mesh with a resin coating as stated above.

Furthermore, a replica using this invention enables a trainee to simulate medical and surgical activities by irreversibly breaking part of the replica. The replica can be reused any number of times by replacing the broken part of the replica as a component.

Minimally invasive endoscopic surgery is a boon to patients; however, both the field of view and the manipulation space are significantly restricted in comparison to conventional surgery. Therefore, doctors who perform such minimally invasive surgery are required to attain an even higher level of surgical skills. Thorough surgical manipulation training is indispensable, particularly for endoscopic sinus surgery performed on the paranasal sinuses, which are extremely complex in structure and are adjacent to vital organs, such as the optic nerve, the brain, and arteries, across thin bone walls. For the abdominal cavity or the like, training can be undertaken using animals or models, and endoscopic surgery is therefore becoming common. For the paranasal sinuses, however, there is no appropriate animal model. Moreover, the paranasal sinuses are complex in structure, so it has previously been impossible to make an artificial model. For this reason, training in paranasal sinus surgery has had to rely on the use of cadavers, which are rare. Accordingly, endoscopic sinus surgery is not pervasive in comparison to surgery performed on other body parts due to the current conditions. Under these circumstances, the above replica (model) precisely reproduces the intranasal skeletal structure from CT images of the human head and allows training in endoscopic nasal surgical manipulation at a level close to that of training using a cadaver, by using materials and structures (developed using this application) that give tactile responses to surgical manipulation close to those of real organs. Basic surgical manipulation skills can therefore be acquired using models created with this invention in addition to cadavers, which are becoming increasingly rare. It is therefore expected that endoscopic nasal surgery will become widespread with improved safety.

The above replica (model) is a real patient model, not only for observing but also for performing endoscopic nasal surgery, e.g. incision and resection. With this replica, it is possible to practice endoscopic observation and undergo training in basic surgical techniques, such as endoscopic ethmoidectomy and open the natural ostium of the maxillary sinus, using actual surgical instruments, e.g. forceps, while feeling tactile responses close to those felt when resecting real organs. The replica is designed so that the parts subjected to resection or opening are replaceable as expendable components. Thus, training costs can be minimized.

The structures of the paranasal sinuses are very complex, so it has previously been practically impossible to make models by the conventional molding method. In general, even rather complex structures can be reproduced as a solid by using a rapid prototyping (RP) system, typically with an stereolithography machine, provided that the three-dimensional morphology can be reconstructed as shape data on a computer. However, the walls of bones constituting the paranasal sinuses are very thin (approximately 0.1 mm). Therefore, it is not easy to reconstruct three-dimensional morphology even using CT images, which has had considerably improved in resolution in recent years (resolution: about 0.4 mm). It is very difficult to create a model reproducing tactile responses during surgical manipulation in addition to the morphology because of the resolution of the RP system and the mechanical strength of the material. Although surgical simulators using virtual reality (VR) technology are being researched and developed actively, the algorithm for organ deformation, which is associated with surgical manipulation, and the technology to present tactile responses to surgical manipulation (technology for the presentation of tactile and force sensations) are still under investigation. In particular, real-time calculation or feedback of a rupturing phenomenon, such as opening the ethmoid sinus, is impossible under current conditions.

Training using the above replica (model) to develop accurate surgical procedures based on understanding the complex structures inside the nasal cavity allows inexperienced doctors to improve their surgical skills and hence contributes to the spread of minimally invasive surgery and safety improvements.

Conventional models are for "observation", and neither the exterior nor interior is constructed to be incised by surgical manipulation. The conventional models are costly and are not used for cutting or puncturing by surgical manipulation. The above replica (model) aims principally at surgical procedure training and reproduces not only the morphology but also tactile responses during surgical manipulation. Compared with surgical simulators developed in recent years using VR technology, the replica (model) is superior in terms of the quality and reality of tactile responses and costs.

The characteristic feature of the above replica (model) is that the skeletal and mucosal structures reconstructed from CT images of the human body are so precise that they are suitable for endoscopic examination. The internal structure of the ethmoid sinuses is also reproduced. Therefore, the replica enables a trainee to undergo training in surgical procedures using actual surgical instruments (e.g. forceps) while feeling near-real tactile responses. Furthermore, parts that may be subjected to resection or opening by surgical manipulation are expendable components and training costs can therefore be reduced. We also succeeded in reproducing the precise morphology and tactile responses of real tissue through shape reconstruction by three-dimensional CAD, shape forming by RP technology, and the selection and improvement of materials and structures by sensory tests. In the future, it will be possible to develop the above replica (model) into a more advanced endoscopic sinus surgery training system by combining it with a measurement and presentation system for data related to surgery (force applied to the patient, position of the endoscope, etc.) and a model of patient responses (pain, blood pressure, pulse, perspiration, etc.) that is under investigation and development at the Digital Human Research Laboratory of the Japan National Institute of Advanced Industrial Science and Technology. Replicas using this invention can also be applied to parts of the body other than the nose.

### [Advantages of the Invention]

This invention offers the following advantageous effects.
(1) In comparison to cadavers, a satisfactorily large number of replicas can be ensured. The replica can also be provided at lower costs than cadavers and is easier to dispose of (the replica can be dumped as general refuse). Accordingly, training using the replica can undergone anywhere at any time without any danger of infection (from prions or viruses).
(2) In comparison to animals, a satisfactory number of replicas can be ensured (the number of opportunities for surgical training using animals is tending to decrease from the viewpoint of preventing cruelty to animals). The replica can be used for parts (nasal cavity, etc.) for which no appropriate animal model is available.
(3) Conventional models are made principally for observation, whereas this replica aims principally at incision and hence allows training in actual surgical procedures using surgical instruments.
(4) With VR systems, training is performed using special-purpose mockups of an endoscope and forceps attached to the system. In contrast, this system enables any surgical instruments to be used and training with actual surgical instruments is therefore possible. The system can also be used for the development of new surgical instruments.
(5) In VR systems, the virtual endoscope and virtual forceps are placed with sensors, and the interaction between the interior shape model and the virtual surgical instrument is computed to create computer graphic images and reaction force presented by driving a motor. Therefore, a time lag may unavoidably occur in the system reaction (i.e. in the presentation of images and reaction force).

In this replica model, all operations are performed in real time.

## Claims

1. A replica comprising a bone part and soft tissue that are reproduced with physical properties close to those of real tissue.

2. A replica according to claim 1, wherein at least a part of the replica is a breakable part that can be irreversibly broken during surgical manipulation.

3. A replica according to claim 2, wherein the breakable part is replaceable.

4. A production method for the replica, comprising the steps of:
creating shape data concerning a part of a human body by CAD (Computer-Aided Design);
rapid prototyping of said part of the human body on a basis of said shape data; and
forming a resin coating on said rapid prototyped part of the human body, thereby reproducing the part of the human body.

5. A production method for a replica according to claim 4, wherein said part of the human body is a paranasal sinus region.

## Amended claims

### Amended claims under Art. 19.1 PCT

**1.** Amended) A replica comprising a thin bone part having a thickness of not more than 0.1 mm, said thin bone part being reproduced with physical properties close to those of real tissue.

**2.** (Amended) A replica according to claim 1, further comprising soft tissue, said soft tissue being reproduced with physical properties close to those of real tissue.

**3.** (Amended) A replica according to claim 1 or 2, wherein at least a part of said replica is a breakable part that can be irreversibly broken during surgical manipulation.

**4.** (Amended) A replica according to claim 2, wherein said breakable part is replaceable.

**5.** (Amended) A production method for a replica, comprising the steps of:
creating shape data concerning a thin bone part having a thickness of not more than 0.1 mm by CAD (Computer-Aided Design); and
rapid prototyping said thin bone part on a basis of said shape data, thereby reproducing a part of a human body.

**6.** (Added) A production method for a replica according to claim 5, further comprising the step of:
forming a resin coating on said rapid prototyped thin bone part.

**7.** (Added) A production method for a replica according to claim 5 or 6, wherein said part of the human body is a paranasal sinus region.
